# EUROPEAN PATENT APPLICATION

(11) **EP 3 045 310 A1**
(43) Date of publication of application: **20.07.2016**
(21) Application number: 15000085.9
(22) Date of filing: 15.01.2015
(51) Int. Cl.: B32B 15/09, A45D 37/00, B32B 15/20, B32B 27/06, B32B 27/08, B32B 27/12, B32B 27/30, B32B 27/32, B32B 27/36, B65D 75/58

(54) **Pouch for semi-dense or liquid product with applicator**

(71) Applicant: Amcor Flexibles Italia S.R.L., 36030 Lugo Di Vicenza (VI) (IT)
(72) Inventor: Arcaro, Alberto, 35143 Padova (IT); Fessler, Thomas, 78467 Konstanz (DE)
(74) Representative: Althaus, Roland

(57) **Abstract**

The present invention relates to a pouch (1) for semi-dense or liquid products and a method for manufacturing the same. The pouch (1) comprising a first half (5) and a second half (6) of a flexible sheet material, whereby the flexible sheet material comprises at least an outer layer (10), a tie layer (15) and porous layer (20), the porous layer carrying at least partly a semi-dense or liquid product (25), whereby the first half (5) and the second half (6) form walls of the pouch, their respective porous layers (20) facing a product space formed by the first half (5) and the second half (6) and whereby a sealed seam (30) joins the first half (5) and the second half (6) of the flexible sheet material and peelably seals the pouch, the sealed seam (30) being formed by the tie layer (15) fully impregnating the porous layer (20) in the area of the sealed seam (30) forming a peelable seal.

## Description

The present invention relates to the technical field of packaging and in particular to a pouch for semi-dense or liquid product with an integrated applicator for the product.

Nowadays numerous products are marketed in smaller quantities sufficient for a single use. Often there is an applicator that comes with the packed product. The applicator may for instance be a non-woven. Such an applicator usually serves to apply the product to the surface of a body. The product may be a semi-dense or liquid cosmetic or pharmaceutical. Household products may also be packaged this way, e.g. products for cleaning purposes.

Moreover, manufacturers of a variety of products, such as personal care, cosmetic, and perfume often distribute samplers containing small quantities or samples of their products to their current or potential customers. For example, manufacturers in the cosmetic industry often obtain customers by offering samples of their products. This is for instance common in the perfume industry. Such samplers may be distributed by hand to individual shoppers in stores. They may also be affixed to the pages of publications such as advertising catalogs and magazines which are distributed to potential customers.

Typically, such pouches consist of a flexible pouch or envelope, in which a small quantity of a sample product is carried by an applicator which is sealed between two flexible barrier sheets or between the folds of a single sheet. Upon opening of the pouch the applicator may be removed from the pouch and the pharmaceutical or cosmetic can be applied to the desired surface. Also known in the art are pouches wherein the applicator is affixed to the outer sheet so the user may apply the product without getting in contact with said product. The reason may be that the product is for instance corrosive or the product should not be contaminated and its sterility should be preserved.

WO 2006/010624 discloses a container for semi-dense cosmetic or pharmaceutical products. The container is combined with an internally affixed applicator.

US 4,896,768 discloses a presaturated wipe product which has a dilute glutaraldehyde saturated pad secured to a layer of packaging material. The saturated pad is sealed in the packaging.

In the process of manufacturing such pouches the applicator is usually positioned on and affixed to the outer sheet in a separate process step. The applicator is then impregnated with the product in a subsequent step before the pouch is finally sealed. This process is lengthy and laborious. There is therefore an ongoing need for a pouch that is easily loaded with the desired product and manufactured in a simple method. Said method of packaging a product will minimize process variables and provide production reliability.

The object of the present invention is to provide a peelable opening pouch generating two distinct halves with an integrated applicator on both halves and which is simply to manufacture avoiding the disadvantages of the state of the art.

The object is achieved by a pouch according to claim 1 and a method according to claim 8. Further preferred embodiments are subject to dependent claims.

A pouch according to the present invention comprises a first half and a second half of a flexible sheet material. The flexible sheet material comprises at least an outer layer, a tie layer and porous layer. The porous layer carries at least partly a semi-dense or liquid product. The first half and the second half of the flexible sheet material form walls of the pouch, their respective porous layers face a product space that is formed by the first half and the second half of the flexible sheet material and a sealed seam joins the first half and the second half of the flexible sheet material and peelably seals the pouch. The sealed seam is formed by the tie layer, i.e. the material the tie layer is made of, fully impregnating the porous layer in the area of the sealed seam thereby forming a peelable seal.

The pouch according to the present invention advantageously integrates the applicator in form of a porous layer capable of carrying the product to be packed.

In a preferred embodiment the outer layer comprises a polyethylene terephtalate layer and an aluminium layer. Both layers provide a very good barrier and protect the product from drying out and further prevent premature release of the product. Further structures of the outer layer are PET/PET SiOₓ (1.5<x<1.9) and PET / metalized plastics. Other suitable materials for the outer layer is ceramic coated polyester such as Ceramis^{®}, CPT003 grade (PET-SiOₓ); and Toppan^{®} (GL-AEH grade; PET AlOₓ).

In another embodiment the tie layer comprises at least one polymer. Said polymer is selected from the group consisting of polyethylene, polypropylene, ethylene methacrylate, ethylene acrylic acetate, polystyrene, ethylene vinyl acetate, polybutylene, ionomers, co-polymers and blends thereof. A preferred blend comprises polyethylene and polybutylene.

The porous layer may consist of a vast number of porous materials, e.g. non-woven and foams whereby the foam must be open cell foam. In a further embodiment the porous layer comprises at least one porous material which is selected from the group consisting of polyethylene terephtalate fibres, polyamide fibres, polyolefin fibres and open cell foams such as elastomeric polyurethane foam. The open cell foams may have a porosity gradient, where the porosity increases from outside to inside such that the porosity is greatest on the porous layer facing the product space of the pouch. Composite fibres are a further suitable material for the porous layer. Composite fibres are for instance PET fibres having a PET core and a polyethylene coating on the PET core. Composite non-woven materials that comprise at least two layers of a non-woven and have different porosities may also be used. Non-woven materials are preferred over open cell foams. Polyethylene terephtalat fibres are the most preferred material for the porous layer.

In a preferred embodiment the tie layer has a weight/area in the range of 15g/m² to 120g/m², preferably in the range of 30g/m² to 100g/m² and more preferably 40g/m² to 80g/m².

In another embodiment the porous layer has a thickness in the range 100µm to 1500µm, preferably in the range of 150µm to 1000µm and more preferably in the range of 200µm to 800µm. In the case of non-wovens the thickness is determined according to the standard ISO 9073-2: 1995. Flexible foams are simply calipered.

The pouch may house different products which should not come into direct contact with the user except for the location where topical use is desired. A reason for this may be that the product is harmful for the user when it comes into contact with the skin. Other products should be preserved as sterile as possible to avoid complications such as infections. In a preferred embodiment the product is a semi-dense or liquid pharmaceutical product or a cosmetic product.

A method for the manufacture of a pouch comprises the steps of
- laminating an outer layer to a porous layer by means of a tie layer to a flexible sheet material,
- shaping the flexible sheet material by forming two halves and mate a first half and second half from the flexible sheet material
- peelably heat seal the first half and the second half along the outer perimeter of a product space except for a remaining top opening
- filling a semi-dense or liquid product to the product space through the remaining top opening, the product at least partially impregnating the porous

layer facing the product space
- and subsequently heat sealing the remaining opening thereby peelably sealing the product space of the pouch
- die cut the sealed complex or pouch along specific outer geometries, and
- collect the single pouches for subsequent operations.

As an alternative to standard heat sealing using a pair of heated bars ultrasonic welding may be used.

Since the applicator for the product is integrated in the laminate film of which the pouch is eventually manufactured, said method is simple. Steps usually necessary such as cutting of the applicator, positioning on and subsequently affixing the applicator to the outer sheet can be omitted. The laminate film used to manufacture the pouch according to the present invention may be produced and then stored in the form of a reel before it is put to further use in the production of pouches.

The pouch for semi-dense and liquid products according to the present invention is explained in more detail below with reference to exemplary embodiments in the drawings, in which, purely schematically:
- Fig. 1: shows a cross-sectional view of a laminate film;
- Fig. 2: shows a cross-sectional view of first and second half;
- Fig. 3: shows a cross-sectional view of a pouch;
- Fig. 4: shows a plan view of a pouch;
- Fig. 5: shows a plan view of a further embodiment of a pouch;
- Fig. 6A: shows a third embodiment of a pouch;
- Fig. 6B: shows a fourth embodiment of a pouch.

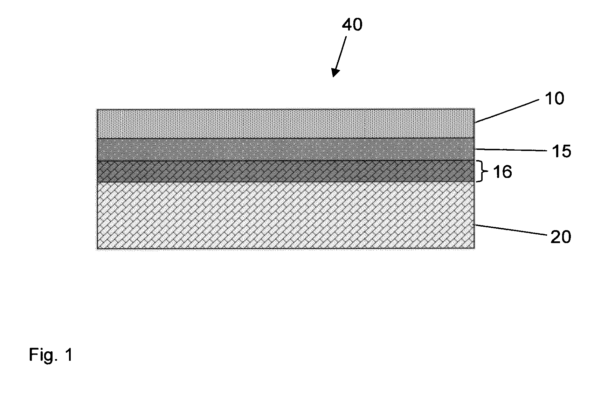

Fig. 1 shows an embodiment of a laminate film 40. The laminate film 40 comprises an outer layer 10 which is laminated to a porous layer 20 by means of a tie layer 15. In the overlapping zone 16 the tie layer 15 impregnates the porous layer 20 thereby affixing the porous layer 20 to the outer layer 10. This embodiment of the laminate film 40 is the simplest form of such a laminate. The outer layer 10 and also the porous layer 20 may comprise more than one layer.

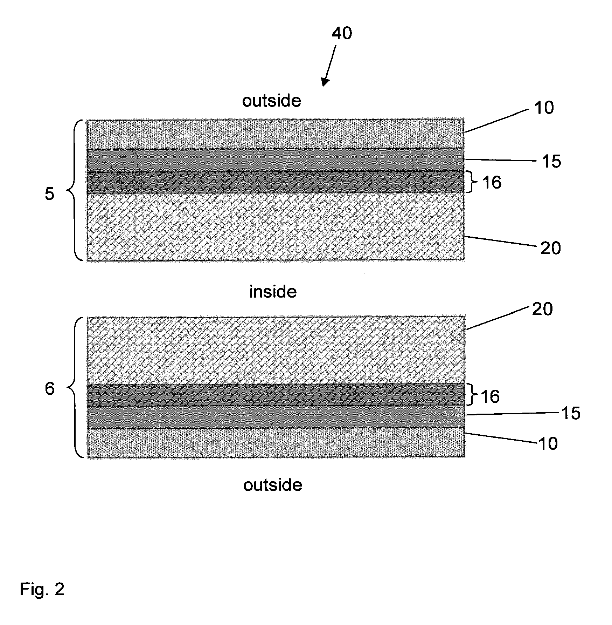

Fig. 2 shows a first half 5 and a second half 6. Both halves 5 and 6 comprise an outer layer 10, a tie layer 15 and a porous layer 20. The porous layer 20 is bonded to the outer layer 10 via the tie layer 15, whereby the tie layer 15 partially impregnates the porous layer 20. Both halves 5 and 6 are made of the laminate film 40. The outer layer 10 of each halves 5 and 6 faces the outside of a pouch (not shown) whereas the porous layer 20 of both halves 5 and 6 faces the inside of the pouch, i.e., the product space.

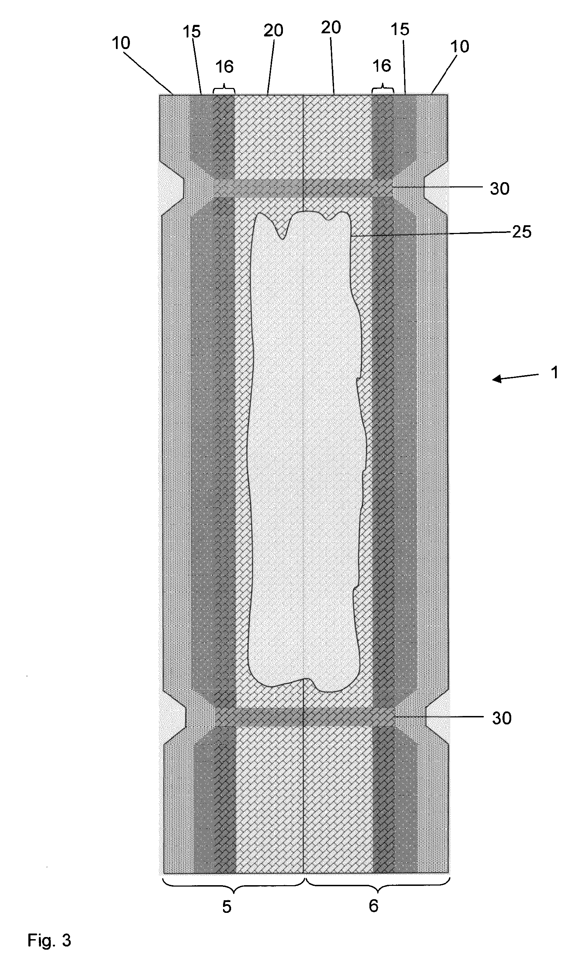

Fig. 3 shows a pouch 1 in cross-section. The first half 5 and the second half 6 forming the pouch 1 have a sealed seam 30 enclosing the product space wherein the semi-dense or liquid product 25 is confined. At the sealed seam 30 the tie layer 15, i.e., the material the tie layer is made of, fully impregnates the porous layer 20 thereby forming a peelable seal. Each half 5 and 6 comprise an outer layer 10 and a tie layer 15 bonding the porous layer 20 to the outer layer 10. The porous layer 20 carries the semi-dense or liquid product 25.

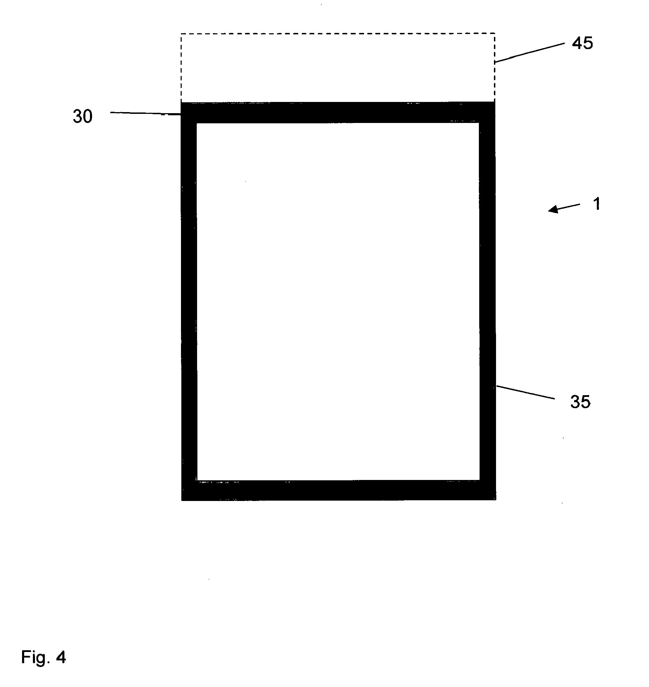

Fig. 4 shows a pouch 1 in plan view. A sealed seam 30 runs along the outer perimeter 35 of the pouch 1 formed by the first half 5 and the second half 6, the latter half not being visible. The pouch may further comprise flaps 45 that enable a fast and simple opening of the pouch.

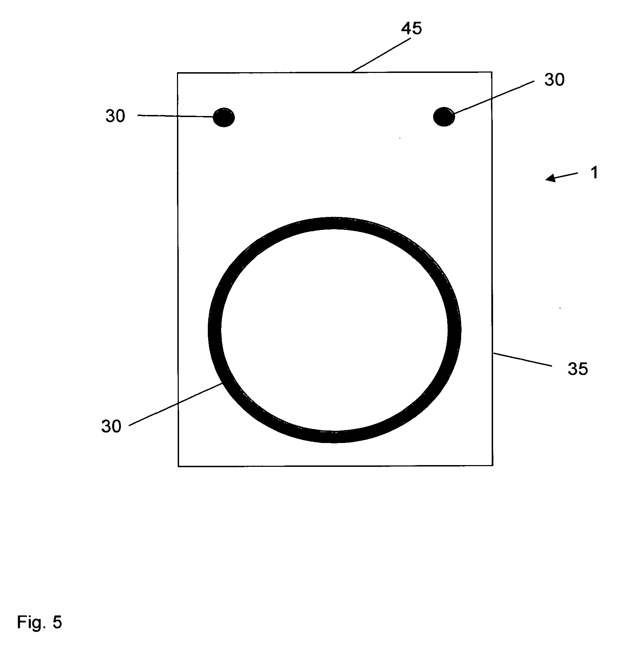

Fig. 5 shows a further embodiment of a pouch 1. The sealed seam is not necessarily arranged along the outer perimeter of both halves 5 and 6. In this embodiment has a circular shape. Additional sealing points 30 prevent the part of the halves 5 and 6 which extends beyond the circular sealed seam confining the product space from unwanted folding. The part of the halves 5 and 6 extending the sealed seam may serve as flaps, i.e., opening means when the pouch is opened by the user and the two distinct halves 5 and 6 carrying the semi-dense or liquid product are put to use.

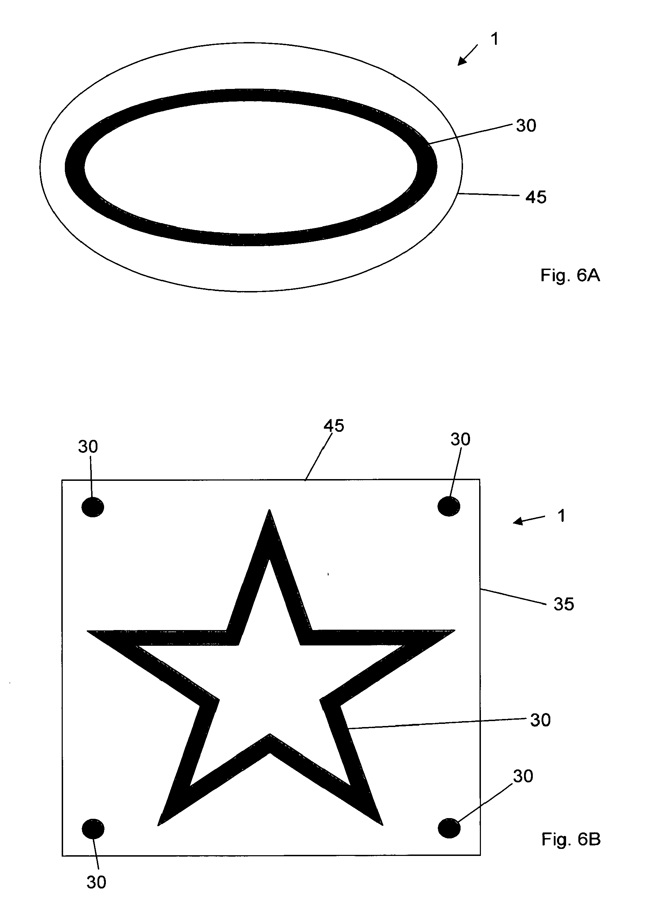

Fig. 6A and 6B illustrate further embodiments of the pouch 1 with different outer geometries. As can be seen the sealed seam 30 may have almost any shape feasible within the area of the mated halves 5 and 6. In the embodiment shown in Fig. 6A the sealed seam has an oval shape as well as the pouch 1 itself has. In the embodiment shown in Fig. 6B the pouch 1 has a quadratic shape whereas the sealed seam 30 has a star-like shape. Four additional sealing points 30 keep the parts of the halves 5 and 6 extending beyond the sealed seam 30 in place and prevent unwanted folding of the flaps 45 until the pouch is opened by the user.

### Example 1

A flexible sheet material was obtained from adhesive lamination of PET12 film to aluminum foil 9 micron (3g/m² PU adhesive system) and extrusion lamination of the foil to 50g/m² spunlace PET fibres non-woven (fibre mixture 50%w/w 1.7 den and 50%w/w 2.2 den) 380 micron thick. Tie layer having 64g/m² total areal weight, obtained by coextrusion 5g/m² of EAA resin (Nucrell^{®} 3990 from DuPont) with 59g/m² of a peelable PE/PB resin blend (composition: 82% Borealis^{®} CA9150, 18% Lyondell Basell^{®} PB8340M). Four side sealed pouches were obtained sealing two distinct 80x120mm² halves of said flexible laminate sheet using a Brugger HSG/ETK machine set at 180°C, 4 seconds sealing time, 6bar sealing pressure. Peel strength achieved along sealed profile resulted in 9.8 N/15mm. Before top sealing the pouches, 5ml of blue coloured, personal care liquid (Nivea Body Q10 Gel SUPOGEL 11^{®}, Beiersdorf) was filled to the product space with a syringe. 5 sealed pouches were kept in a 40°C oven (almost dry condition) for 30 days to monitor weight loss, any leakages and aroma release. Peelably sealed profile did not show any leakages. The average weight loss was about 0.06% of the initially filled amount and the personal care liquid practically retained the original intense flavour.

### Example 2

A second flexible sheet material was obtained by extrusion laminating coated paper 50g/m² to aluminum foil (9 micrometer thickness) via 12g/m² of LDPE (PG 7008, Dow Chem) and extrusion laminating the foil to a non-woven composite. The nonwoven complex was composed by a 30g/m² spunlace PET fibres non-woven (fibre mixture 50%w/w 1.7 den and 50%w/w 2.2 den) needlepunched to a 30g/m² soft touch PET fibre thermobonded non-woven. The apparent thickness of the non-woven composite was about 540 micron (determined according to standard ISO 9073-2: 1995). The tie layer having 77g/m² total areal weight, obtained by coextruding 5g/m² of EAA resin (Nucrell 3990 from DuPont) with 72g/m² of a peelable modified ethylene acrylate polymer available from DuPont (Appeel^{®} 72D811). Four side sealed pouches were obtained sealing two distinct 80x120mm² halves of said flexible laminate sheet using a Brugger HSG/ETK machine set at 200°C, 2 seconds sealing time, 6bar sealing pressure. Peel strength achieved along sealed profile resulted in 7.2 N/15mm.

## Claims

1. Pouch (1) comprising a first half (5) and a second half (6) of a flexible sheet material, whereby the flexible sheet material comprises at least an outer layer (10), a tie layer (15) and porous layer (20), the porous layer carrying at least partly a semi-dense or liquid product (25), whereby the first half (5) and the second half (6) form walls of the pouch, their respective porous layers (20) facing a product space formed by the first half (5) and the second half (6) and whereby a sealed seam (30) joins the first half (5) and the second half (6) of the flexible sheet material and peelably seals the pouch, the sealed seam (30) being formed by the tie layer (15) fully impregnating the porous layer (20) in the area of the sealed seam (30) forming a peelable seal.

2. Pouch (1) according to claim 1, whereby the outer layer (10) comprises a polyethylene terephtalate layer and an aluminium layer.

3. Pouch (1) according to claim 1 or 2, whereby the tie layer (15) comprises at least one polymer selected from the group consisting of polyethylene, polypropylene, ethylene methacrylate, ethylene acrylic acetate, polystyrene, ethylene vinyl acetate, polybutylene, ionomers , co-polymers and blends therof.

4. Pouch (1) according to any of the preceding claims, whereby the porous layer (20) comprises at least one porous material selected from the group consisting of polyethylene terephtalate fibres, polyamide fibres, polyolefin fibres and open cell foams.

5. Pouch (1) according to any of the preceding claims, whereby the tie layer (15) has a weight/area in the range of 15g/m² to 120g/m², preferably in the range of 30g/m² to 100g/m² and more preferably 40g/m² to 80g/m².

6. Pouch (1) according to any of the preceding claims, whereby the porous layer (20) has a thickness in the range 100µm to 1500µm, preferably in the range of 150µm to 1000µm and more preferably in the range of 200µm to 800µm.

7. Pouch according to any of the preceding claims, whereby the semi-dense or liquid product is a pharmaceutical product or a cosmetic product.

8. Method for the manufacture of a pouch (1) according to any of the preceding claims comprising the steps of
• laminating an outer layer (10) to a porous layer (20) by means of a tie layer (15) to a flexibel sheet material (40)
• shaping a first half (5) and second half (6) from the flexible sheet material (40) and mating the first half (5) and the second half (6),
• peelably heat sealing the first half (5) and the second half (6) along the outer perimeter of a product space except for a remaining top opening
• filling a semi-dense or liquid product (25) to the product space through the remaining top opening, the product (25) at least partially impregnating the porous layer (20) facing the product space
• and subsequently heat sealing the remaining top opening thereby peelably sealing the product space of the pouch (1)
• die cut the sealed pouch along specific outer geometries, and
• collect the single pouches for subsequent operations.

9. Method for the manufacture of a pouch according to claim 8, whereby the heat sealing is achieved by ultrasonic welding.
